# FASCICULE DE BREVET EUROPEEN

(11) **EP 0 765 730 B1**
(45) Date de publication et mention de la délivrance du brevet: **09.12.1998**
(21) Numéro de dépôt: 96402039.0
(22) Date de dépôt: 26.09.1996
(51) Int. Cl.: B29C 53/66, B29C 53/82, B29C 70/34, B29C 70/16, B29C 69/00

(54) **Procédé de fabrication d'une préforme composée d'une fibre enroulée en spirale**
Verfahren zum Herstellen einer Vorform aus einer spiralförmigen gewickelten Faser
Method for manufacturing a preform comprising of a spiral-wound fiber

(30) Priorité: 27.09.1995 FR 9511302
(43) Date de publication de la demande: 02.04.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Berthelemy, Jean-Claude Robert, 91540 Mennecy (FR); Molliex, Ludovic Edmond Camille, 75013 Paris (FR); Gauthier, Gérard Philippe, 91240 St Michel sur Orge (FR); Perroux, Alain Robert Yves, 91130 Ris Orangis (FR)

(56) Documents cités:
- FR-A- 2 523 650
- FR-A- 2 533 499
- US-A- 2 431 883
- PATENT ABSTRACTS OF JAPAN vol. 009, no. 215 (M-409), 3 Septembre 1985 & JP-A-60 076238 (SUMIKO TOKUHARA), 30 Avril 1985,

## Description

La présente invention concerne un procédé de fabrication d'une préforme composée d'une fibre enroulée en spirale.

Elle a notamment trait à la fabrication d'anneaux en matériau composite où la fibre assure la résistance mécanique de la pièce. Une famille de procédés de fabrication est caractérisée par l'emploi du pressage isostatique à chaud, ce qui n'implique pas de direction particulière de la fibre mais exige un outillage particulier et une mise en oeuvre délicate. Une autre famille de procédés consiste à consolider la pièce par un pressage dans l'axe de l'anneau, ce qui est plus facile en soi, mais il est admis que les fibres doivent être agencées avec plus d'ordre et de régularité et qu'il faut les enrouler en spirales qu'on superpose selon l'épaisseur de l'anneau. La réalisation de ces enroulements de fibres est pourtant difficile. On a déjà proposé d'accoler un ruban métallique à la fibre et d'enrouler à la fois la fibre et le ruban, pour que celui-ci serve d'espaceur aux spires consécutives de la fibre ; ou même d'usiner un disque en y formant une rainure en spirale par voie électrochimique, dans laquelle la fibre est logée.

Ces procédés impliquent donc un élément d'espacement qui enchérit sensiblement la fabrication et font sentir le besoin de procédés plus simples, tels que celui de l'invention.

Brièvement résumée, celle-ci consiste à enrouler la fibre sur un tronc de cône puis à aplatir ou écraser l'enroulement tronconique obtenu pour le transformer en spirale. Contrairement à ce qu'on pourrait peut-être supposer, ces deux étapes essentielles sont accomplies facilement grâce à certaines astuces techniques, et la qualité du résultat n'est pas difficile à assurer.

De façon plus précise, l'invention concerne un procédé de fabrication d'une préforme composée d'une fibre enroulée en spirale, comprenant les étapes suivantes :
- enrouler la fibre sur une piste en hélice bâtie sur un mandrin tronconique,
- verser un liant thermoplastique à l'état liquide sur le mandrin pour enrober la fibre et former une enveloppe de cône,
- laisser durcir le liant,
- démouler l'enveloppe de cône et la poser sur une plaque,
- chauffer l'enveloppe de cône localement, à une circonférence de base d'où elle s'élève de la plaque, pour l'amollir et la faire s'affaisser progressivement sur la plaque en la transformant en disque tout en exerçant si nécessaire une force sur l'enveloppe de cône vers la plaque.

On peut utiliser un liant sujet à la pyrolyse et qu'il est donc facile d'éliminer par chauffage quand la spirale est obtenue. Un autre perfectionnement indépendant du précédent consiste à refroidir la plaque pour que les parties de l'enveloppe de cône devenues planes soient immédiatement figées et que les spires ne soient donc plus déformées.

Enfin, le démoulage peut être favorisé si le mandrin comprend un manchon externe sur lequel la piste est bâtie et une structure interne amovible de tenue du manche. Cette structure peut être en réalité une structure de dilatation du manchon, qui est alors construit en matière élastique et se contracte dès que la structure est retirée, ce qui le décolle de l'enveloppe de cône. Dans une autre conception, le manchon est thermoplastique et perd sa rigidité à une température plus basse que l'enveloppe du cône, ce qui permet de le retirer de celle-ci par pelage après avoir légèrement chauffé.

L'invention va maintenant être décrite plus en détail à l'aide des figures suivantes, qui sont annexées à titre illustratif et non limitatif :
- la figure 1 est une illustration de l'enroulement,
- la figure 2 représente le mandrin,
- la figure 3 illustre l'écrasement du tronc de cône,
- et la figure 4 représente le produit obtenu.

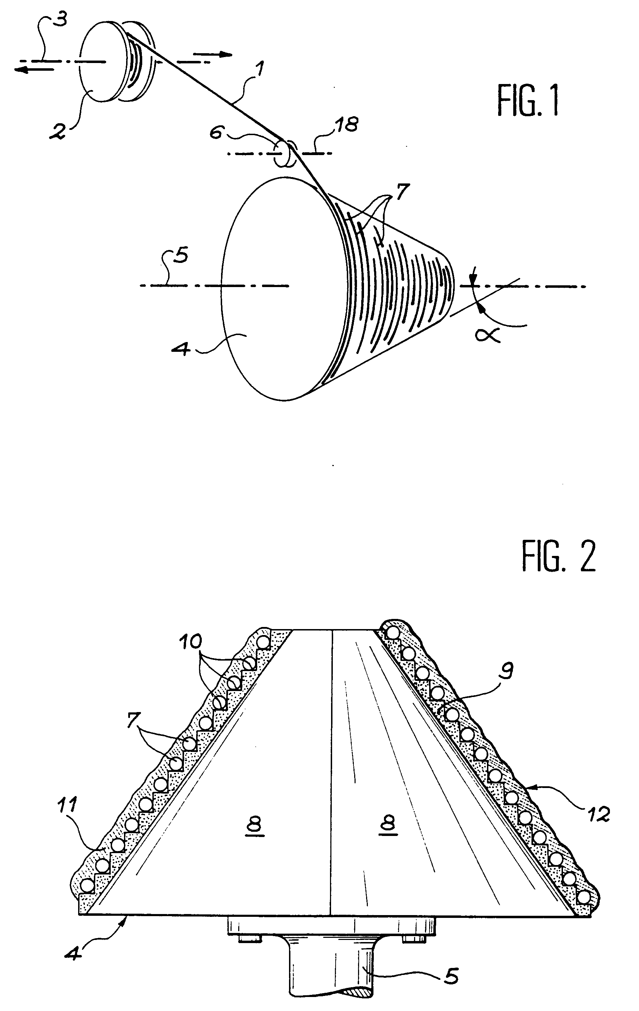

Une fibre 1 à base de carbure de silicium est, comme on le voit sur la figure 1, dispensée d'une bobine 2 montée folle sur un axe 3, et un mandrin 4 tronconique est monté sur une broche 5 tournante et coaxiale à l'axe 3. Le trajet de la fibre 1 peut être amélioré grâce à une bobine pilote 6 par laquelle elle passe et qui est mobile le long d'un autre axe 18 parallèle à la broche 5. Un système de commande non représenté assure à la fois la translation de la bobine pilote 6 et la rotation de la broche 5 et du mandrin 4 de quantités liées par un rapport fixe pour que la fibre 1 s'enroule sur le mandrin 4 en formant des spires 7 de diamètres différents mais de pas constant. Comme on le voit à la figure 2, le mandrin 4 est composé de coins 8 en secteur de tronc de cône qui sont accolés et d'un manchon 9 qui coiffe les coins 8 en étant forcé sur eux, de façon à être dilaté en diamètre. Le manchon 9 a une face interne conique d'angle d'ouverture égal à celui des coins 8 mais une face externe sur laquelle on a opéré une piste hélicoïdale 10 sur laquelle les spires 7 se posent. Cette disposition garantit de tout déplacement accidentel des spires 7 et assure le pas recherché entre elles. Le manchon 9 peut être à base de Téflon ou d'un autre polymère, éventuellement en matière thermoplastique.

L'étape suivante consiste à verser un produit liant sur les spires 7 pour former une matrice 11 qui les recouvre et les enrobe complètement, et qui les maintient en place une fois qu'elle a durci.

Il peut s'agir de polyméthyl-métacrylate [CH₂C(CH₃)(CO₂CH₃)-]ₙ thermoplastique, d'abord mêlé à un solvant qui le porte à l'état liquide, puis s'évapore naturellement ou par chauffage et laisse alors le liant durcir.

On procède ensuite au démoulage de l'enveloppe de cône 12 composée des spires 7 et de la matrice 11. On démonte pour cela le mandrin 4 de la broche 5 et on extrait les coins 8. Le manchon 9 se contracte et tombe.

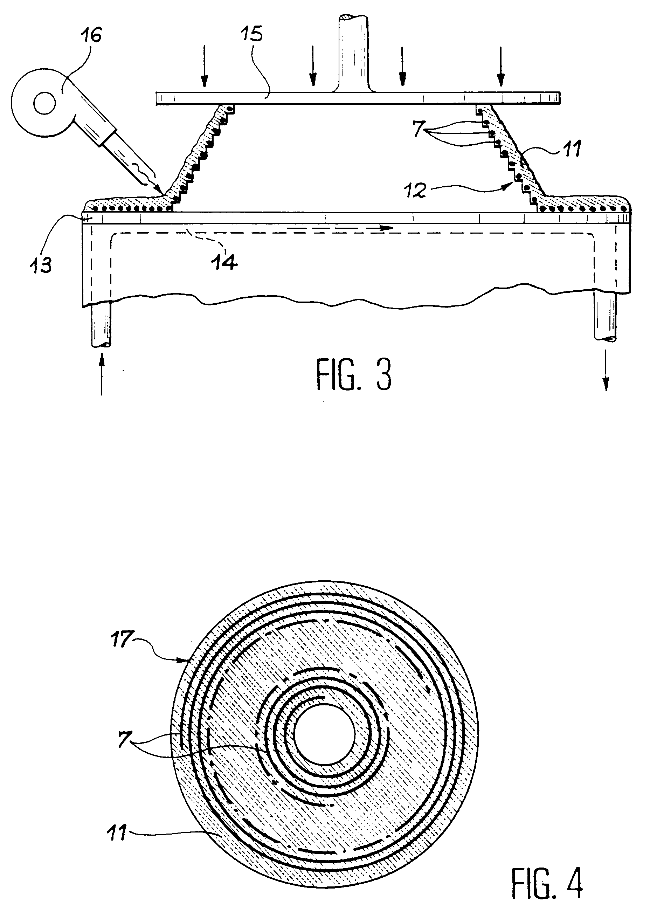

L'enveloppe de cône 12 est ensuite posée sur une sole 13 qui peut être en cuivre refroidi par une chambre de circulation d'eau 14 située sous elle. On voit que l'enveloppe de cône 12 est pressée contre la sole 13 jusqu'à ce qu'elle s'écrase et s'aplatisse sur elle. On peut utiliser pour cela une presse 15 surplombant la sole 13. Il faut cependant amollir la matrice 11, ce qui est facile si le liant est thermoplastique : on exerce un chauffage sur la portion de l'enveloppe de cône 12 à la base pour l'amollir et la faire s'affaisser progressivement sur la surface de la sole 13. On peut utiliser un laser tournant, ou, de façon plus rudimentaire, un engin de soufflage d'air chaud (ici représenté par 16) ou une spatule chauffée qu'on promène sur l'enveloppe de cône 12. Quel que soit le procédé utilisé, l'enveloppe de cône 12 se transforme peu à peu en une galette 17, ou un disque, représentée à la figure 4 et les fibres hélicoïdales deviennent planes. Le refroidissement de la sole 13 permet de figer de nouveau la matrice 11 juste après le chauffage et d'éviter des déformations postérieures et accidentelles des spires 7 autrement que dans la direction axiale.

L'étape finale du procédé de création d'un anneau, qui n'est évoquée que succinctement car elle ne fait appel qu'à des opérations connues ou évidentes, consistera à empiler les galettes 17 en interposant éventuellement des feuilles minces d'espacement, puis à décomposer la matrice 11 par pyrolyse pour ne laisser subsister que la fibre, et enfin, à enrober l'empilement de spirales par le véritable produit formant la matrice du matériau composite. La pyrolyse du polyméthyl-métacrylate est obtenue par un chauffage à 500°C pendant deux heures, sous un flux de gaz neutre à 10 hPa. Une charge est appliquée sur l'empilement pour empêcher que les spirales ne se déplacent en glissant. La décomposition est plus rapide si l'enveloppe de cône 12 est perforée, ce qui facilite le dégazage.

On a déjà signalé ou évoqué la simplicité des opérations de ce procédé et de l'équipement utilisé. Il faut ajouter qu'il suffit de remplacer la mandrin 4 par un autre, d'ouverture de cône différente, pour pouvoir régler le pas des spires 7 dans la galette 17. Le même résultat est atteint en modifiant le pas de la piste 10.

Il n'est pas nécessaire de dilater un manchon 9 élastique sur les coins 8 pour le séparer de l'enveloppe de cône 12. Si par exemple il est thermoplastique, il suffit de le chauffer à une température où la matrice 11 reste rigide, puis de le peler.

Le liant peut aussi être mêlé à un produit pulvérulent qui servira à constituer la matrice du matériau composite final. Il a alors pour fonction supplémentaire de retenir cette poudre jusqu'à la pyrolyse.

## Revendications

1. Procédé de fabrication d'une préforme composée d'une fibre (1) enroulée en spirale, comprenant les étapes suivantes :
• enrouler la fibre sur une piste en hélice (10) bâtie sur un mandrin (4) tronconique,
• verser un liant thermoplastique à l'état liquide sur le mandrin (4) pour enrober la fibre (1) et former une enveloppe de cône (12),
• laisser durcir le liant,
• démouler l'enveloppe de cône (12) et la poser sur une plaque (13),
• chauffer l'enveloppe de cône (12) localement, à une circonférence de base d'où elle s'élève de la plaque (13), pour l'amollir et la faire s'affaisser progressivement sur la plaque en la transformant en disque (17) tout en exerçant si nécessaire une force sur l'enveloppe de cône vers la plaque.

2. Procédé de fabrication d'une préforme selon la revendication 1, caractérisé en ce que la plaque (13) est refroidie (14).

3. Procédé de fabrication d'une préforme selon l'une quelconque des revendications 1 ou 2, caractérisé en ce que le liant peut être soumis à une pyrolyse.

4. Procédé de fabrication d'une préforme selon l'une quelconque des revendications 1 à 3, caractérisé en ce que le mandrin (4) est composé d'un manchon externe (9) sur lequel la piste (10) est bâtie et d'une structure interne (8) amovible de tenue du manchon.

5. Procédé de fabrication d'une préforme selon la revendication 4, caractérisé en ce que le manchon est thermoplastique.

6. Procédé de fabrication d'une préforme selon la revendication 4, caractérisé en ce que le manchon est élastique et dilaté par la structure interne.

## Claims

1. A process for manufacturing a preform consisting of a spirally wound fibre (1) and comprising the following steps :
winding the fibre on a helical track (10) built on a trunco-conical former (4);
pouring a thermoplastic binder in the liquid state over the former (4) to envelop the fibre (1) and form a conical envelope (12);
allowing the binder to harden;
removing the conical envelope (12) and placing it on a plate (13), and
heating the conical envelope (12) locally on its base circumference where it rises from the plate (13) to soften it and cause it gradually to collapse onto the plate and to be transformed into a disc (17), if necessary forcing the conical envelope towards the plate.

2. A process according to claim 1, characterised in that the plate (13) is cooled (14).

3. A process according to claim 1 or claim 2, characterised in that the binder can be subjected to a pyrolysis.

4. A process according to any of claims 1 to 3, characterised in that the former (4) consists of an outer sleeve (9) on which the track (10) is built and of a releasable internal structure (8) for holding the sleeve.

5. A process according to claim 4, characterised in that the sleeve is thermoplastic.

6. A process according to claim 4, characterised in that the sleeve is resilient and is expanded by the internal structure.

## Patentansprüche

1. Verfahren zur Herstellung einer Vorform aus einer spiralförmig gewickelten Faser (1), aufweisend die folgenden Schritte:
- Rollen der Faser auf einer spiralförmigen Spur (10), die auf einem kegelstumpffömigen Wickelkern (4) liegt,
- Gießen eines thermoplastischen Bindemittels im flüssigen Zustand auf den Wickelkern (4), um die Faser (1) zu bedecken und einen konusförmigen Mantel (12) zu bilden,
- Aushärten des Bindemittels,
- Herausnehmen des konusförmigen Mantels (12) und Legen von diesem auf eine Platte (13),
- lokales Erwarmen des konusförmigen Mantels (12) an einer Basis-Umfangsfläche, wo er die Platte (13) berührt, um ihn zu erweichen und ihn fortschreitend auf die Platte absinken zu lassen, wodurch er scheibenförmig (17) verformt wird, wobei gegebenenfalls eine Kraft auf den konusförmigen Mantel in Richtung der Platte ausgeübt wird.

2. Herstellungsverfahren für eine Vorform nach Anspruch 1,
**dadurch gekennzeichnet,** daß die Platte (13) gekühlt (14) ist.

3. Herstellungsverfahren für eine Vorform nach Anspruch 1 oder 2,
**dadurch gekennzeichnet,** daß das Bindemittel einer Pyrolyse unterzogen wird.

4. Verfahren zur Herstellung einer Vorform nach einem der Ansprüche 1 bis 3,
**dadurch gekennzeichnet,** daß der Wickelkern (4) aus einer Außenstülpe (9), auf der die Spur (10) gelegt ist, und einer abnehmbaren Innenstruktur (8) besteht, die die Stülpe hält.

5. Herstellungsverfahren für eine Vorform nach Anspruch 4,
**dadurch gekennzeichnet,** daß die Stülpe thermoplastisch ist.

6. Herstellungsverfahren für eine Vorform nach Anspruch 4,
**dadurch gekennzeichnet,** daß die Stülpe elastisch ist und durch die Innenstruktur gedehnt wird.
